# EUROPÄISCHE PATENTANMELDUNG

(11) **EP 3 663 709 A1**
(43) Veröffentlichungstag der Anmeldung: **10.06.2020**
(21) Anmeldenummer: 18210033.9
(22) Anmeldetag: 04.12.2018
(51) Int. Cl.: G01B 21/04, G01B 11/25

(54) **VERFAHREN ZUR 3D-ERFASSUNG EINES MESSOBJEKTES**

(71) Anmelder: Carl Zeiss Optotechnik GmbH, 83115 Neubeuern (DE)
(72) Erfinder: Frey, Alexander, 83233 Bernau a. Chiemsee (DE)
(74) Vertreter: Behr, Wolfgang

(57) **Zusammenfassung**

Die vorliegende Erfindung zeigt ein Verfahren zur 3D-Erfassung eines Messobjektes mit einem 3D-Messgerät, welches einen 3D-Sensor und mindestens eine Referenzkamera zur Erfassung von Referenzmarken umfasst, mit den Schritten:
- Erfassen von Referenzpunkten mittels der Referenzkamera,
- Erfassen von Referenzpunkten mittels des 3D-Sensors und
- Erzeugen einer maßhaltig skalierten globalen Referenzpunktliste der mittels der Referenzkamera erfassten Referenzpunkte unter Verwendung der mittels des 3D-Sensors erfassten lokalen Koordinaten der Referenzpunkte.

## Beschreibung

Die vorliegende Erfindung betrifft ein Verfahren zur 3D-Erfassung eines Messobjektes mit einem 3D-Messgerät, welches ein 3D-Sensor und mindestens eine Referenzkamera zur Erfassung von Referenzmarken umfasst.

Zur globalen Ausrichtung von lokal bestimmten 3D-Punkten, die mit einem 3D-Sensor erzeugt wurden, können bei einem solchen Messgerät photogrammetrisch vermessene Referenzpunkte verwendet werden.

Bei einem solchen Verfahren wird zuerst eine Photogrammetrie-Messung der Referenzpunkte zur Erstellung einer globalen Referenzpunktliste durchgeführt. Dabei werden mit einem oder mehreren Referenzkameras zunächst 2D-Bilder aufgenommen, aus denen die 3D-Koordinaten der Referenzpunkte berechnet werden. Diese stellen die globale Referenzpunktliste dar.

Im Rahmen eines solchen Verfahrens ist es üblich, die globale Maßhaltigkeit auf Längenmaßstäbe zurückzuführen, welche im Messvolumen platziert werden. Hierzu werden kalibrierte Längenmaßstäbe (üblicherweise mindestens zwei Stück) eingesetzt. Diese Längenmaßstäbe werden dann in der photogrammetrischen Auswertung der durch die Referenzkamera aufgenommenen Bilder berücksichtigt, um die resultierende Referenzpunktliste so zu skalieren, dass die Widersprüche zu den Maßstabslängen minimiert werden. Abschließend können die Längenmaßstäbe sowie sonstige Hilfsmittel wie beispielsweise kodierte Marken entfernt werden.

Anschließend findet die 3D-Messung mit dem 3D-Sensor statt, wobei die Referenzpunkte hierbei im lokalen Sensorkoordinatensystem gemessen werden. Die 3D-Messungen werden dann anhand der lokalen Koordinaten der Referenzpunkte auf die globale Referenzpunktliste ausgerichtet, wobei die verbleibenden Abweichungen minimiert werden.

Die Längenmaßstäbe haben unter anderem folgende, unvorteilhafte Eigenschaften:
- Sie müssen während der Photogrammetrie-Messung im Messvolumen platziert werden und dabei in möglichst vielen Bildern sichtbar sein.
- Sie müssen regelmäßig zertifiziert werden, d. h. sie müssten mehrfach vorhanden sein, um Ausfallzeiten zu minimieren.
- Sie müssen vorsichtig behandelt werden, um ihre geometrische Form und Funktion nicht zu verlieren.
- Im industriellen Einsatz außerhalb einer Klimakammer muss Ihr Verhalten bezüglich der Umgebungsbedingungen berücksichtigt werden, insbesondere die temperaturabhängige Ausdehnung.
- Sie verursachen Kosten in Anschaffung und Zertifizierung.

Aufgabe der vorliegenden Erfindung ist es, ein Verfahren zur Verfügung zu erstellen, bei welchem bei der Erstellung der globalen Referenzpunktliste auf Längenmaßstäbe verzichtet werden kann.

Diese Aufgabe wird erfindungsgemäß durch ein Verfahren gemäß Anspruch 1 gelöst. Vorteilhafte Ausgestaltungen der vorliegenden Erfindung sind Gegenstand der Unteransprüche.

Die vorliegende Erfindung umfasst ein Verfahren zur 3D-Erfassung eines Messobjektes mit einem 3D-Messgerät, welches einen 3D-Sensor und mindestens eine Referenzkamera zur Erfassung von Referenzmarken umfasst, mit den Schritten:
- Erfassen von Referenzpunkten mittels der Referenzkamera,
- Erfassen von Referenzpunkten mittels des 3D-Sensors und
- Erzeugen einer maßhaltig skalierten globalen Referenzpunktliste der mittels der Referenzkamera erfassten Referenzpunkte unter Verwendung der mittels des 3D-Sensors erfassten lokalen Koordinaten der Referenzpunkte.

Durch die vorliegende Erfindung kann auf den Einsatz von Längenmaßstäben zur Erstellung einer maßhaltigen globalen Referenzpunktliste verzichtet werden, indem die Maßhaltigkeit auf den 3D-Sensor zurückgeführt wird.

In einer möglichen Ausgestaltung der vorliegenden Erfindung wird der 3D-Sensor vor dem Erfassen der Referenzpunkte maßhaltig kalibriert. Eine solche maßhaltige Kalibrierung des 3D-Sensors wird üblicherweise ohnehin durchgeführt, so dass das erfindungsgemäße Verfahren hier keinen zusätzlichen Aufwand erfordert. Durch die maßhaltige Kalibrierung des 3D-Sensors liegen die durch den 3D-Sensor erfassten lokalen Koordinaten von Referenzpunkten ebenfalls maßhaltig vor und können daher anstelle der Längenmaßstäbe zur maßhaltigen Skalierung der globalen Referenzpunktliste eingesetzt werden.

In einer möglichen Ausgestaltung der vorliegenden Erfindung erfolgt die maßhaltige Kalibrierung durch die 3D-Erfassung eines Kalibrierobjekts. Insbesondere kann dabei eine Kalibrierplatte eingesetzt werden.

In einer möglichen Ausgestaltung der vorliegenden Erfindung wird bei der Kalibrierung des 3D-Sensors die temperaturbedingte Ausdehnung des Kalibrierobjektes berücksichtigt. Insbesondere kann die aktuelle Temperatur des Kalibrierobjektes bestimmt und hieraus die tatsächlichen Dimensionen des Kalibrierobjektes unter Berücksichtigung der temperaturbedingten Ausdehnung ermittelt werden, welche dann der Kalibrierung zugrunde gelegt werden.

In einer möglichen Ausgestaltung der vorliegenden Erfindung wird mittels des 3D-Sensors ein Messobjekt in lokalen Koordinaten erfasst, wobei die lokalen Koordinaten anhand der Referenzpunktliste in ein globales Koordinatensystem übertragen werden. Es werden daher die lokalen 3D-Daten des Messobjektes in ein globales Koordinatensystem übertragen. Dies erfolgt mittels der ebenfalls in lokalen Koordinaten durch den 3D-Sensor erfassten Referenzpunkte, welche auf die globale Referenzpunktliste ausgerichtet werden.

In einer möglichen Ausgestaltung der vorliegenden Erfindung erfolgt die Erfassung des Messobjektes und die Erfassung der Referenzpunkte mittels des 3D-Sensors in dem gleichen Messdurchgang.

Insbesondere kann die Erfassung des Messobjektes und die Erfassung der Referenzpunkte mittels des 3D-Sensors gleichzeitig erfolgen. Die Erfassung des Messobjektes und die Erfassung der Referenzpunkte mittels des 3D-Sensors kann jedoch auch in unmittelbar aufeinander folgenden Messungen und/oder Aufnahmen erfolgen.

In einer möglichen Ausgestaltung der vorliegenden Erfindung erfolgt die Erfassung des Messobjektes und die Erfassung der Referenzpunkte mittels des 3D-Sensors jeweils aus der gleichen Relativposition zwischen 3D-Sensor und Messobjekt. Hierdurch wird sichergestellt, dass die lokalen Koordinaten der durch den 3D-Sensor erfassten Referenzpunkte zur globalen Ausrichtung der lokalen Koordinaten des Messobjekts eingesetzt werden können.

In einer möglichen Ausgestaltung der vorliegenden Erfindung wird der Schritt des Erfassens von Referenzpunkten mittels der Referenzkamera vor dem Schritt des Erfassens von Referenzpunkten mittels des 3D-Sensors durchgeführt.

In einer möglichen Ausgestaltung der vorliegenden Erfindung sind während des Erfassens von Referenzpunkten mittels der Referenzkamera codierte Referenzpunkte in der Szenerie angeordnet. Diese erlauben die Zuordnung der einzelnen Referenzpunkte zueinander in den einzelnen durch die Referenzkamera aufgenommenen 2D-Aufnahmen.

In einer möglichen Ausgestaltung der vorliegenden Erfindung werden die codierten Referenzpunkte für das Erfassen von Referenzpunkten mittels des 3D-Sensors zumindest teilweise entfernt. Für die 3D-Erfassung werden die codierten Referenzpunkte nicht unbedingt benötigt und können daher, falls sie ansonsten die 3D-Erfassung des Messobjekts stören würden, entfernt werden.

In einer möglichen alternativen Ausgestaltung der vorliegenden Erfindung wird der Schritt des Erfassens von Referenzpunkten mittels der Referenzkamera nach dem Schritt des Erfassens von Referenzpunkten mittels des 3D-Sensors durchgeführt. Auch ein solcher Verfahrensablauf ist denkbar.

In diesem Fall bleiben bevorzugt während beider Schritte codierte Referenzpunkte in der Szenerie angeordnet.

In einer möglichen Ausgestaltung der vorliegenden Erfindung wird anhand der mittels der Referenzkamera erfassten Referenzpunkte in einem ersten Schritt eine erste nicht maßhaltig skalierte Referenzpunktliste erzeugt, welche dann in einem zweiten Schritt unter Verwendung der mittels des 3D-Sensors erfassten lokalen Koordinaten von Referenzpunkten skaliert wird, um eine zweite, nunmehr maßhaltig skalierte Referenzpunktliste zu erzeugen.

Bevorzugt wird in dieser Art und Weise vorgegangen, wenn der Schritt des Erfassens von Referenzpunkten mittels der Referenzkamera vor dem Schritt des Erfassens von Referenzpunkten mittels des 3D-Sensors durchgeführt wird.

In einer möglichen Ausgestaltung der vorliegenden Erfindung wird die erste nicht maßhaltig skalierte Referenzpunktliste zur globalen Ausrichtung der mittels des 3D-Sensors erfassten lokalen Koordinaten der Referenzpunkte eingesetzt.

In einer möglichen Ausgestaltung der vorliegenden Erfindung erfolgt die Skalierung durch Minimierung der Abweichungen zwischen der ersten Referenzpunktliste und den global ausgerichteten lokalen Koordinaten der Referenzpunkte.

In einer möglichen Ausgestaltung der vorliegenden Erfindung erfolgt die Erzeugung einer finalen maßhaltig skalierten Referenzpunktliste iterativ in mehreren Durchgängen. Insbesondere kann die zweite Referenzpunktliste zum nochmaligen globalen Ausrichten der mittels des 3D-Sensors erfassten lokalen Koordinaten der Referenzpunkte herangezogen werden. Eine dritte Referenzpunktliste wird dann durch nochmaliges Skalieren der zweiten Referenzpunktliste unter Minimierung der Abweichungen zwischen der zweiten Referenzpunktliste und den global ausgerichteten lokalen Koordinaten der Referenzpunkte erzeugt.

In einer möglichen alternativen Ausgestaltung der vorliegenden Erfindung wird die maßhaltig skalierte Referenzpunktliste unmittelbar auf Grundlage der mittels der Referenzkamera erfassten Referenzpunkte und der mittels des 3D-Sensors ermittelten lokalen Koordinaten der Referenzpunkte erzeugt.

Bevorzugt wird in dieser Art und Weise vorgegangen, wenn der Schritt des Erfassens von Referenzpunkten mittels der Referenzkamera nach dem Schritt des Erfassens von Referenzpunkten mittels des 3D-Sensors durchgeführt wird.

In einer möglichen Ausgestaltung der vorliegenden Erfindung erfolgt die Erzeugung der globalen Referenzpunktliste mittels photogrammetrischer Auswertung der durch die Referenzkamera erfassten Referenzpunkte, insbesondere durch Bündelblockausgleichung.

In einer möglichen Ausgestaltung der vorliegenden Erfindung werden die mittels des 3D-Sensors ermittelten lokalen Koordinaten der Referenzpunkte bei der photogrammetrischen Auswertung der mittels der Referenzkamera erfassten Referenzpunkte als weitere Bedingungen berücksichtigt, um die maßhaltig skalierte Referenzpunktliste zu erzeugen. Dies kann beispielsweise unmittelbar bei der Erzeugung der Referenzpunktliste aus den durch die Referenzkamera aufgenommenen 2D-Aufnahmen und/oder zur Skalierung einer bereits erzeugten Referenzpunktliste erfolgen.

In einer möglichen Ausgestaltung der vorliegenden Erfindung gehen in die Erzeugung der maßhaltig skalierten globalen Referenzpunktliste mehrere 3D-Messungen des 3D-Sensors aus mehreren unterschiedlichen Positionen ein. Hierdurch wird die Genauigkeit erhöht.

In einer möglichen Ausgestaltung der vorliegenden Erfindung umfasst der 3D-Sensor einen Projektor zum Projizieren eines Musters und eine Kamera. Die Kamera nimmt Aufnahmen des auf das Messobjekt und/oder auf Referenzmarken, welche die Referenzpunkte definierten, projizierten Musters auf.

Das 3D-Messgerät weist bevorzugt weiterhin eine Auswertungseinheit auf, welche aus den Aufnahmen der Kamera die lokalen 3D-Koordinaten des Messobjekts und/oder der Referenzpunkte in dem Koordinatensystem des 3D-Sensors bestimmt.

In einer bevorzugten Ausgestaltung der vorliegenden Erfindung arbeitet der 3D-Sensor bevorzugt mittels Streifenprojektion.

In einer möglichen Ausgestaltung der vorliegenden Erfindung wird der 3D-Sensor in mehreren Positionen angeordnet, aus welchen jeweils zumindest teilweise unterschiedliche Bereiche des Messobjekts und/oder zumindest teilweise unterschiedliche Referenzpunkte erfasst werden.

Der 3D-Sensor kann handgeführt ausgestaltet sein. Alternativ kann der 3D-Sensor durch einen Roboter bewegt werden.

Erfindungsgemäß können eine oder mehrere Referenzkameras eingesetzt werden, um mehrere 2D-Aufnahmen der Referenzpunkte aus mehreren Positionen aufzunehmen. Das 3D-Messgerät weist bevorzugt eine Auswertungseinheit auf, welche aus den Aufnahmen der mindestens einen Referenzkamera die 3D-Koorindaten der Referenzpunkte zur Erzeugung der globalen Referenzpunktliste bestimmt

Die vorliegende Erfindung umfasst weiterhin ein 3D-Messgerät mit einem 3D-Sensor und mindestens einer Referenzkamera zur Erfassung von Referenzmarken, wobei das 3D-Messgerät eine Steuerung umfasst, welche zur Durchführung eines Verfahrens, wie es oben näher beschrieben wurde, konfiguriert ist. Bevorzugt ist das 3D-Messgerät so ausgestaltet, wie dies oben im Hinblick auf das erfindungsgemäße Verfahren näher beschrieben wurde.

In einer möglichen Ausgestaltung der vorliegenden Erfindung umfasst die Steuerung eine Kalibrierfunktion zur Kalibrierung des 3D-Sensors.

In einer möglichen Ausgestaltung der vorliegenden Erfindung umfasst die Steuerung eine Auswertungsfunktion zur automatischen Auswertung der Daten des 3D-Sensors und der Referenzkamera zur Erzeugung der maßhaltig skalierten globalen Referenzpunktliste. Insbesondere arbeitet die Steuerung so, wie die oben näher beschrieben wurde. Insbesondere kann die Steuerung eine Auswertungseinheit umfassen, wie sie oben näher dargestellt wurde. Die Auswertung erfolgt bevorzugt automatisch durch die Steuerung.

Die Steuerung kann einen Mikrocontroller und einen nicht-flüchtigen Speicher, auf welchem ein Programmcode zur Durchführung eines erfindungsgemäßen Verfahrens abgespeichert ist, umfassen. Die Steuerung steht bevorzugt mit der mindestens einen Referenzkamera und dem 3D-Sensor in Verbindung, um diese anzusteuern und die Daten der mindestens einen Referenzkamera und des 3D-Sensors auszuwerten.

Die vorliegende Erfindung wird nun anhand eines Ausführungsbeispiels sowie einer Zeichnung näher beschrieben.

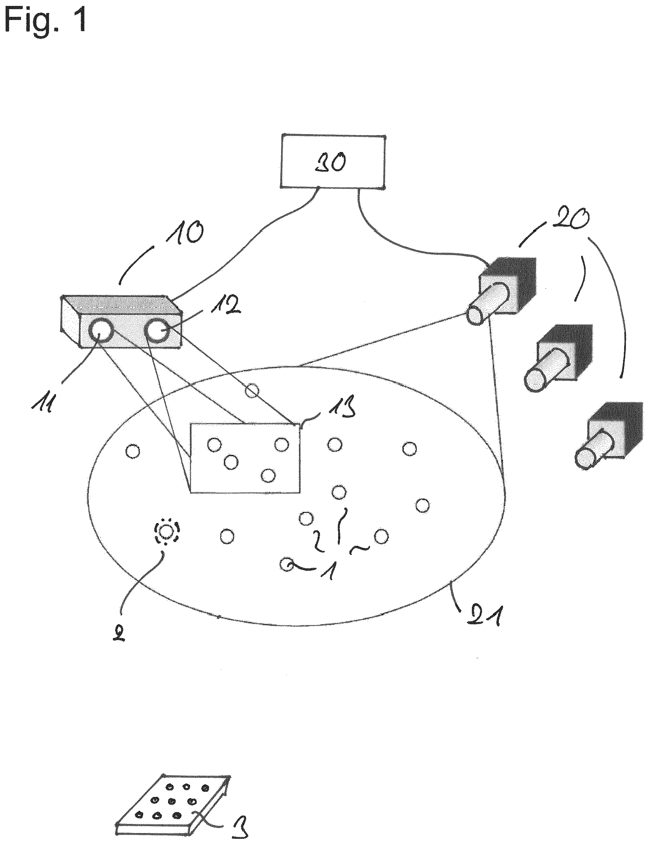

Dabei zeigt
- Fig. 1: ein Ausführungsbeispiel eines erfindungsgemäßen 3D-Messgerätes sowie eines erfindungsgemäßen Verfahrens zur 3D-Erfassung eines Messobjektes.

Fig. 1 zeigt schematisch ein Ausführungsbeispiel eines erfindungsgemäßen 3D-Messgerätes mit einem 3D-Sensor 10 sowie mindestens einer Referenzkamera 20. Je nach Ausführungsbeispiel können auch mehrere Referenzkameras 20 eingesetzt werden.

Der 3D-Sensor umfasst im Ausführungsbeispiel einen Projektor 11 sowie eine Kamera 12. Der Projektor 11 projiziert ein Muster, welches von der Kamera 12 erfasst und durch eine Auswerteeinheit ausgewertet wird, um 3D-Koordinaten in einem lokalen Koordinatensystem des 3D-Sensors zu ermitteln. Beispielsweise kann der 3D-Sensor mittels Streifenprojektion arbeiten.

Ein 3D-Sensor hat üblicherweise ein relativ kleines Messvolumen 13, sodass zur Erfassung eines Messobjektes mehrere Aufnahmen von Teilbereichen des Messobjektes erzeugt und zusammengesetzt werden müssen. Um die in den einzelnen Aufnahmen jeweils in unterschiedlichen lokalen Koordinatensystemen erzeugten 3D-Daten in ein globales Koordinatensystem zu überführen und dort zu fusionieren, werden Referenzpunkte 1 eingesetzt. Diese können auf dem Messobjekt, neben dem Messobjekt und/oder im Hintergrund des Messobjektes angeordnet werden.

Die Referenzpunkte 1 werden bevorzugt durch Referenzmarken definiert, welche bspw. aus einem weißen Kreis auf schwarzem oder dunklem Hintergrund bestehen können.

Beispielsweise können die Referenzpunkte 1 in Form von Referenzmarken auf das Messobjekt aufgeklebt oder auf einer Kulisse angeordnet sein, an welcher das Messobjekt angeordnet ist.

Um die Referenzpunkte 1 zur globalen Ausrichtung der lokal bestimmten 3D-Daten des 3D-Sensors einsetzen zu können, müssen diese zunächst photogrammetrisch vermessen werden. Hierfür ist die mindestens eine Referenzkamera 20 vorgesehen, welche ein größeres Messvolumen 21 aufweist als der 3D-Sensor 10.

Mittels der mindestens einen Referenzkamera werden die Referenzpunkte 1 in mehreren 2D-Bildern aus unterschiedlichen Positionen aufgenommen. Um die Referenzpunkte in den einzelnen Bildern der mindestens einen Referenzkamera einander zuordnen zu können, sind bevorzugt kodierte Referenzmarken 2 im Messvolumen angeordnet. Die Codierung dient der eindeutigen Identifikation einer Referenzmarke und ermöglicht dadurch das einfache Auffinden derselben Referenzmarke in mehreren Bildern. Die codierten Referenzmarken 2 bestehen bspw. aus einem weißen Kreis auf schwarzem oder dunklem Hintergrund, welcher jedoch durch codierte Zeichen umgeben ist. Es existieren jedoch auch vielfältige andere Codierungen.

Durch die photogrammetrische Auswertung der 2D-Bilder der mindestens einen Referenzkamera wird eine globale Referenzpunktliste erzeugt, welche die 3D-Koordinaten der Referenzpunkte 1 in einem globalen Koordinatensystem enthält.

Der 3D-Sensor 10 und die mindestens eine Referenzkamera 20 stehen mit einer Steuerung 30 in Verbindung, welche die Daten auswertet und zusammenführt.

Die durch den 3D-Sensor 10 jeweils in einem lokalen Koordinatensystem ermittelten 3D-Daten des Messobjektes werden dann über die ebenfalls mittels des 3D-Sensors erfassen lokalen 3D-Koordinaten der Referenzpunkte an der Referenzpunkliste ausgerichtet, um die 3D-Daten des 3D-Sensors in ein globales Koordinatensystem zu überführen.

Die vorliegende Erfindung macht sich nun zur Nutze, dass 3D-Sensoren, welche zur Messung der lokalen 3D-Punkte verwendet werden, ohnehin maßhaltig kalibriert werden müssen. Dies kann beispielsweise mittels einer photogrammetrisch vermessenen Kalibrierplatte 3 erfolgen.

Bei der 3D-Messung sind die lokalen 3D-Punkte des Messobjekts und die lokalen Koordinaten der Referenzpunkte daher innerhalb des Messvolumens 13 des 3D-Sensors maßhaltig bestimmt. Erfindungsgemäß wird diese Maßhaltigkeit verwendet, um die Referenzpunktliste zu skalieren.

In einem ersten Ausführungsbeispiel des erfindungsgemäßen Verfahrens wird zunächst eine photogrammetrische Erfassung der Referenzpunkte 1 mittels der mindestens einen Referenzkamera 20 durchgeführt, wobei jedoch keine Maßstäbe eingesetzt werden. Die hierdurch erzeugte globale Referenzpunkteliste ist nach der Bündelblockausgleichung damit nur ungefähr skaliert, also nicht maßhaltig.

Daraufhin werden mit dem 3D-Sensor 10 die 3D-Messungen des Messobjektes durchgeführt, welche mittels der ebenfalls Erfassten Referenzpunkte auf die nur ungefähr skalierte Referenzpunkteliste gerichtet werden.

Daraufhin werden die Abweichungen zwischen den in das globale Koordinatensystem übertragenen lokalen Koordinaten der Referenzpunkte, welche durch den 3D-Sensor 10 ermittelt wurden, und der Referenzpunkteliste ermittelt. Die Referenzpunktliste wird dann so skaliert, dass diese Abweichungen minimiert werden. Dies kann entweder durch eine erneute Bündelblockausgleichung oder eine andere Ausgleichsberechnung stattfinden.

Die 3D-Messungen werden abschließend auf diese neue, maßhaltig skalierte globale Referenzpunktliste ausgerichtet, um die 3D Daten des Messobjektes in einem globalen Koordinatensystem zu ermitteln.

Die Ausrichtung der 3D-Daten des 3D-Sensors auf die Referenzpunkteliste und die Skalierung der Referenzpunkteliste kann gegebenenfalls auch iterativ in mehreren Durchläufen erfolgen, um die Abweichungen weiter zu minimieren.

Das Messvolumen 13 jeder einzelnen 3D-Messung ist im Vergleich zur Abdeckung durch Längenmaßstäbe geringer. Ebenso ist die Messgenauigkeit der lokalen Koordinaten der Referenzpunkte durch den 3D-Sensor vermutlich geringer. Wird daher lediglich eine 3D-Messung zur Skalierung eingesetzt, ist bei dem erfindungsgemäßen Verfahren der entsprechende Skalierfehler zunächst höher zu bewerten als bei einer üblichen Photogrammetrie-Messung mit Längenmaßstäben.

Bevorzugt werden jedoch mehrere 3D-Messungen aus unterschiedlichen Positionen für die Skalierung der Referenzpunktliste herangezogen. Insbesondere werden mehrere 3D-Messungen jeweils unterschiedlicher Teilbereiche des Messobjektes und damit unterschiedlicher Referenzpunkte für die Skalierung der Referenzpunktliste herangezogen. Die räumliche Abdeckung ist hierdurch umfangreicher als bei einzelnen Längenmaßstäben. Hierdurch kann eine erhöhte Maßhaltigkeit erreicht werden.

Bevorzugt wird der 3D-Sensor auf die aktuelle Umgebungstemperatur kalibriert. Dies kann insbesondere mittels einer Kalibrierplatte erfolgen, deren Materialtemperatur und temperaturabhängige Ausdehnung bei der Kalibrierung berücksichtigt wird. Auch hierdurch kann die Maßhaltigkeit verbessert werden.

Gemäß einem zweiten Ausführungsbeispiel der vorliegenden Erfindung werden die 3D-Messungen durch den 3D-Sensor vor der Photogrammetrie-Messung der Referenzpunkte durch die mindestens eine Referenzkamera durchgeführt. Die lokalen Koordinaten der Referenzpunkte werden dann in der Bündelblockausgleichung berücksichtigt, um die in Maßhaltigkeit zu erreichen.

Für die Photogrammetrie-Messung der Referenzpunkte durch die mindestens eine Referenzkamera sollten die Referenzpunkte zumindest teilweise kodiert sein, um eine eindeutige Zuordnung zu ermöglichen.

Bei dem zweiten Ausführungsbeispiel müssen diese kodierten Referenzpunkte für beide Messungen in der Szenerie verbleiben. Bei dem ersten Ausführungsbeispiel sind kodierte Referenzpunkte dagegen lediglich für die Photogrammetrie-Messung notwendig, und können für die 3D-Messung aus der Szenerie entfernt werden.

Unabhängig von dem Ausführungsbeispiel hat die vorliegende Erfindung den Vorteil, dass keine Längenmaßstäbe eingesetzt werden müssen. Hierdurch entfallen die oben näher erläuterten Nachteile dieser Längenmaßstäbe.

Weiterhin erlaubt die vorliegende Erfindung eine verbesserte dimensionale Genauigkeit.

## Patentansprüche

1. Verfahren zur 3D-Erfassung eines Messobjektes mit einem 3D-Messgerät, welches einen 3D-Sensor und mindestens eine Referenzkamera zur Erfassung von Referenzmarken umfasst, mit den Schritten:
- Erfassen von Referenzpunkten mittels der Referenzkamera,
- Erfassen von Referenzpunkten mittels des 3D-Sensors und
- Erzeugen einer maßhaltig skalierten globalen Referenzpunktliste der mittels der Referenzkamera erfassten Referenzpunkte unter Verwendung der mittels des 3D-Sensors erfassten lokalen Koordinaten der Referenzpunkte.

2. Verfahren nach Anspruch 1, wobei der 3D-Sensor vor dem Erfassen der Referenzpunkte maßhaltig kalibriert wird.

3. Verfahren nach Anspruch 1, wobei die maßhaltige Kalibrierung durch die 3D-erfassung eines Kalibrierobjekts erfolgt, insbesondere einer Kalibrierplatte, wobei bevorzugt die temperaturbedingte Ausdehnung des Kalibrierobjektes berücksichtigt wird.

4. Verfahren nach einem der vorangegangenen Ansprüche, wobei mittels des 3D-Sensors ein Messobjekt in lokalen Koordinaten erfasst wird, wobei die lokalen Koordinaten anhand der Referenzpunktliste in ein globales Koordinatensystem übertragen werden.

5. Verfahren nach Anspruch 4, wobei die Erfassung des Messobjektes und die Erfassung der Referenzpunkte mittels des 3D-Sensors in dem gleichen Messdurchgang und bevorzugt gleichzeitig erfolgt und/oder wobei die Erfassung des Messobjektes und der Referenzpunkte mittels des 3D-Sensors jeweils aus der gleichen Relativposition zwischen 3D-Sensor und Messobjekt erfolgt.

6. Verfahren nach einem der vorangegangenen Ansprüche, wobei der Schritt des Erfassens von Referenzpunkten mittels der Referenzkamera vor dem Schritt des Erfassens von Referenzpunkten mittels des 3D-Sensors durchgeführt wird, wobei bevorzugt während des Erfassens von Referenzpunkten mittels der Referenzkamera codierte Referenzpunkte in der Szenerie angeordnet sind, welche weiter bevorzugt für das Erfassen von Referenzpunkten mittels des 3D-Sensors zumindest teilweise entfernt werden.

7. Verfahren nach einem der Ansprüche 1 bis 5, wobei der Schritt des Erfassens von Referenzpunkten mittels der Referenzkamera nach dem Schritt des Erfassens von Referenzpunkten mittels des 3D-Sensors durchgeführt wird, wobei bevorzugt während beider Schritte codierte Referenzpunkte in der Szenerie angeordnet bleiben.

8. Verfahren nach einem der vorangegangenen Ansprüche, wobei anhand der mittels der Referenzkamera erfassten Referenzpunkte in einem ersten Schritt eine erste nicht maßhaltig skalierte Referenzpunktliste erzeugt wird, welche in einem zweiten Schritt unter Verwendung der mittels des 3D-Sensors erfassten lokalen Koordinaten von Referenzpunkten skaliert wird, um eine zweite, maßhaltig skalierte Referenzpunktliste zu erzeugen.

9. Verfahren nach Anspruch 8, wobei die erste nicht maßhaltig skalierte Referenzpunktliste zur globalen Ausrichtung der mittels des 3D-Sensors erfassten lokalen Koordinaten der Referenzpunkte eingesetzt und bevorzugt die Skalierung durch Minimierung der Abweichungen zwischen der ersten Referenzpunktliste und den global ausgerichteten lokalen Koordinaten der Referenzpunkte erfolgt, und/oder wobei die Erzeugung einer finalen maßhaltig skalierten Referenzpunktliste iterativ erfolgt.

10. Verfahren nach einem der Ansprüche 1 bis 7, wobei die maßhaltig skalierte Referenzpunktliste unmittelbar auf Grundlage der mittels der Referenzkamera erfassten Referenzpunkte und der mittels des 3D-Sensors ermittelten lokalen Koordinaten der Referenzpunkte erzeugt wird.

11. Verfahren nach einem der vorangegangenen Ansprüche, wobei die Erzeugung der globalen Referenzpunktliste mittels photogrammetrischer Auswertung der durch die Referenzkamera erfassten Referenzpunkte erfolgt, insbesondere durch Bündelblockausgleichung, wobei bevorzugt die mittels des 3D-Sensors ermittelten lokalen Koordinaten der Referenzpunkte bei der photogrammetrischen Auswertung der mittels der Referenzkamera erfassten Referenzpunkte als weitere Bedingungen berücksichtigt werden, um die maßhaltig skalierte Referenzpunktliste zu erzeugen.

12. Verfahren nach einem der vorangegangenen Ansprüche, wobei in die Erzeugung der maßhaltig skalierten globalen Referenzpunktliste mehrere 3D-Messungen des 3D-Sensors aus mehreren unterschiedlichen Positionen eingehen.

13. Verfahren nach einem der vorangegangenen Ansprüche, wobei der 3D-Sensor einen Projektor zum Projizieren eines Musters und eine Kamera umfasst, wobei der 3D-Sensor bevorzugt mittels Streifenprojektion arbeitet.

14. 3D-Messgerät mit einem 3D-Sensor und mindestens einer Referenzkamera zur Erfassung von Referenzmarken, wobei das 3D-Messgerät eine Steuerung umfasst, welche zur Durchführung eines Verfahrens nach einem der vorangegangenen Ansprüche konfiguriert ist.

15. 3D-Messgerät nach Anspruch 14, wobei die Steuerung eine Kalibrierfunktion zur Kalibrierung des 3D-Sensors und/oder eine Auswertungsfunktion zur automatischen Auswertung der Daten des 3D-Sensors und der Referenzkamera zur Erzeugung der maßhaltig skalierten globalen Referenzpunktliste umfasst.
